# EUROPEAN PATENT APPLICATION

(11) **EP 4 615 122 A1**
(43) Date of publication of application: **10.09.2025**
(21) Application number: 22963972.9
(22) Date of filing: 03.11.2022
(51) Int. Cl.: H04W 72/231

(54) **TIME INFORMATION REPORTING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/129670
(87) International publication number: WO 2024/092662

(57) **Abstract**

The present disclosure relates to the technical field of mobile communications and provides a time information reporting method and apparatus, a communication device, and a storage medium. According to the method, a UE can report time information when a certain preset condition is satisfied, the time information representing the time required by the UE to carry out GNSS measurement, and the preset condition comprising at least one of the following: the UE is in an idle state or an inactive state, and a system message instruction of a serving cell enables reporting of the time information; and the UE is in a connected state, and at least one of the following occasions is present: the UE initiates a connection reestablishment process, the UE performs handover or conditional handover, the UE receives configuration or reconfiguration signaling for enabling reporting of the time information, the UE receives an instruction for instructing to report the time information, and the UE triggers reporting of a GNSS validity duration. The solution of the present disclosure solves the problem that a reporting mechanism for the time required by a UE to carry out GNSS measurement is not clear, so as to adapt to reporting of time information by the UE in different environments.

## Description

### FIELD

The present disclosure relates to the field of mobile communication technology and, in particular, to a method and an apparatus for reporting time information, a communication device, and a storage medium.

### BACKGROUND

Non-terrestrial Network (NTN) communication is an important technology introduced by the Fifth Generation (5G) mobile communication technology, which provides radio resources via satellites or drones rather than terrestrial base stations. However, in the Internet of Things (IoT) NTN, when a User Equipment (UE) performs a Global Navigation Satellite System (GNSS) measurement, a reporting mechanism for the time required for the UE to perform the GNSS measurement (GNSS position fix time duration) is still unclear.

### SUMMARY

The present disclosure proposes a method and an apparatus for reporting time information, a communication device, and a storage medium, which are intended to solve the problem of unclear reporting mechanism for the time required for a UE to perform a GNSS measurement.

Embodiments of a first aspect of the present disclosure provide a method for reporting time information. The method is performed by a user equipment (UE) and includes: reporting the time information in a case where a preset condition is satisfied, in which the time information represents time required by the UE to perform a GNSS measurement, and the preset condition includes at least one of: the UE is in an IDLE state or in an INACTIVE state, and a system message indication of a serving cell enables reporting of the time information; or the UE is in a CONNECTED state, and at least one of following occasions is present: the UE initiates a connection reestablishment process, a handover or a conditional handover occurs, a configuration or reconfiguration signaling for enabling reporting of the time information is received, an indication indicating the reporting of the time information is received, and reporting of a GNSS validity duration is triggered.

In some embodiments of the present disclosure, when the UE is in the IDLE state or in the INACTIVE state, and the system message indication of the serving cell enables the reporting of the time information, reporting the time information includes: reporting the time information through a connection reestablishment complete message or a MAC CE message.

In some embodiments of the present disclosure, a trigger threshold for the time information is configured in the system message indication.

In some embodiments of the present disclosure, when the UE is In the CONNECTED state, and the UE initiates the connection reestablishment process, reporting the time information includes: in response to a system message indication of a re-established cell enabling the reporting of the time information, reporting the time information through a connection reestablishment complete message or a MAC CE message.

In some embodiments of the present disclosure, when the UE in the CONNECTED state, and the handover or the conditional handover occurs, reporting the time information includes: in response to a configuration of a handover command or a conditional handover command for a target cell enabling the reporting of the time information, reporting the time information through a connection reconfiguration complete message or a MAC CE message when switching to the target cell.

In some embodiments of the present disclosure, when the UE is in the CONNECTED state, and the configuration or the reconfiguration signaling for enabling the reporting of the time information is received, reporting the time information includes: reporting the time information through a MAC CE message or a terminal assistance information message.

In some embodiments of the present disclosure, reporting the time information through the MAC CE message or the terminal assistance information message includes: in response to the UE not reporting the time information in a current serving cell, reporting the time information through the MAC CE message or the terminal assistance information message.

In some embodiments of the present disclosure, reporting the time information through the MAC CE message or the terminal assistance information message includes: in response to the UE having reported the time information in a current service cell, reporting the time information through the MAC CE message or the terminal assistance information message in a case where a change in the time information currently to be reported with respect to the time information reported previously is greater than a preset threshold.

In some embodiments of the present disclosure, when the UE is in the CONNECTED state, and the indication indicating the reporting of the time information is received, reporting the time information includes: reporting the time information through a MAC CE message or a terminal assistance information message.

In some embodiments of the present disclosure, when the UE is in the CONNECTED state, and the reporting of GNSS validity duration is triggered, reporting the time information includes: reporting the time information while reporting the GNSS validity duration.

In some embodiments of the present disclosure, the method further includes: when the time information is reported through the MAC CE message, triggering a scheduling request resource in response to the UE currently having no available uplink resource.

In some embodiments of the present disclosure, the scheduling request resource is a scheduling request resource configured by a network for reporting the time information, or a scheduling request resource configured by a network for a logical channel.

In some embodiments of the present disclosure, when the UE is in the CONNECTED state, the method includes: receiving an RRC dedicated message or a MAC CE message sent by a network device, and in response to the RRC dedicated message or the MAC CE message, enabling a reporting function of the time information; or enabling a reporting function of the time information based on a configuration in a system message of the serving cell capable of being used to enable the reporting of the time information.

In some embodiments of the present disclosure, when the UE is in the CONNECTED state, the method further includes: receiving configuration information sent by a network device, the configuration information including a reporting periodicity for the time information.

Embodiments of a second aspect of the present disclosure provide a method for reporting time information. The method is performed by a network device and includes: receiving the time information reported by a user equipment (UE), in which the time information represents time required by the UE to perform a GNSS measurement.

In some embodiments of the present disclosure, receiving the time information reported by the user equipment (UE) includes: receiving the time information reported by the UE through at least one of a connection establishment complete message, a connection reestablishment complete message, a connection reconfiguration complete message, a MAC CE message, or a terminal assistance information message.

In some embodiments of the present disclosure, the method further includes: sending a system message indication to the UE, in which the UE is in an IDLE state or in an INACTIVE state, the system message indication enables reporting of the time information, and a trigger threshold for the time information is configured in the system message indication.

In some embodiments of the present disclosure, the method further includes: sending to the UE a message enabling the reporting of the time information, in which the message is a configuration or reconfiguration signaling enabling the reporting of the time information, or an RRC dedicated message or a MAC CE message.

In some embodiments of the present disclosure, the method further includes: configuring a scheduling request resource to the UE, in which the scheduling request resource is a scheduling request resource dedicated to the UE reporting the time information, or a scheduling request resource configured for a logical channel.

In some embodiments of the present disclosure, the method further includes: sending configuration information to the UE, the configuration information including a reporting periodicity for the time information.

Embodiments of a third aspect of the present disclosure provide an apparatus for reporting time information. The apparatus is applied to a user equipment (UE) and includes: a transceiver module configured to report the time information in a case where a preset condition is satisfied, in which the time information represents time required by the UE to perform a GNSS measurement, and the preset condition includes at least one of: the UE is in an IDLE state or in an INACTIVE state, and a system message indication of a serving cell enables reporting of the time information; or the UE is in a CONNECTED state, and at least one of following occasions is present: the UE initiates a connection reestablishment process, a handover or a conditional handover occurs, a configuration or reconfiguration signaling for enabling reporting of the time information is received, an indication indicating the reporting of the time information is received, and reporting of a GNSS validity duration is triggered.

Embodiments of a fourth aspect of the present disclosure provide an apparatus for reporting time information. The apparatus is applied to a network device and includes: a transceiver module configured to receive the time information reported by a user equipment (UE), in which the time information represents time required by the UE to perform a GNSS measurement.

Embodiments of a fifth aspect of the present disclosure provide a communication device, including: a transceiver, a memory, and a processor connected to the transceiver and the memory, configured to control wireless signal transceiving of the transceiver by executing computer-executable instructions on the memory, and cause the method according to the embodiments of the first aspect or the embodiments of the second aspect to be implemented.

Embodiments of a sixth aspect of the present disclosure provide a computer storage medium storing computer executable instructions that when executed by a processor, causes the method according to the embodiments of the first aspect or the embodiments of the second aspect to be implemented.

Embodiments of a seventh aspect of the present disclosure provide a communication system, including: a user equipment (UE) and a network device, in which,
the UE is configured to perform the method according to the embodiments of the first aspect; and
the network device is configured to perform the method according to the embodiments of the second aspect.

According to the method for reporting the time information of the present disclosure, the UE can report the time information in a case where a preset condition is satisfied, in which the time information represents time required by the UE to perform a GNSS measurement, and the preset condition includes at least one of: the UE is in an IDLE state or in an INACTIVE state, and a system message indication of a serving cell enables reporting of the time information; or the UE is in a CONNECTED state, and at least one of following occasions is present: the UE initiates a connection reestablishment process, a handover or a conditional handover occurs, a configuration or reconfiguration signaling for enabling reporting of the time information is received, an indication indicating the reporting of the time information is received, and reporting of a GNSS validity duration is triggered. The solution of the present disclosure solves the problem that a reporting mechanism for the time required by a UE to carry out GNSS measurement is not clear, so as to adapt to reporting of time information by the UE in different environments.

Additional aspects and advantages of embodiments of present invention will be given in part in the following descriptions, become apparent in part from the following descriptions, or be learned from the practice of the embodiments of the present invention.

### BRIEF DESCRIPTION OF THE DRAWINGS

These and other aspects and advantages of embodiments of the present disclosure will become apparent and more readily appreciated from the following descriptions made with reference to the drawings, in which:
FIG. 1 is a flow chart of a method for reporting time information according to an embodiment of the present disclosure;
FIG. 2 is a flow chart of a method for reporting time information according to an embodiment of the present disclosure;
FIG. 3 is a flow chart of a method for reporting time information according to an embodiment of the present disclosure;
FIG. 4 is a flow chart of a method for reporting time information according to an embodiment of the present disclosure;
FIG. 5 is a flow chart of a method for reporting time information according to an embodiment of the present disclosure;
FIG. 6 is a flow chart of a method for reporting time information according to an embodiment of the present disclosure;
FIG. 7 is a flow chart of a method for reporting time information according to an embodiment of the present disclosure;
FIG. 8 is a flow chart of a method for reporting time information according to an embodiment of the present disclosure;
FIG. 9 is a flow chart of a method for reporting time information according to an embodiment of the present disclosure;
FIG. 10 is a flow chart of a method for reporting time information according to an embodiment of the present disclosure;
FIG. 11 is an interaction schematic diagram of a method for reporting time information according to an embodiment of the present disclosure;
FIG. 12 is a block diagram of an apparatus for reporting time information according to an embodiment of the present disclosure;
FIG. 13 is a block diagram of an apparatus for reporting time information according to an embodiment of the present disclosure;
FIG. 14 is a block diagram of an apparatus for reporting time information according to an embodiment of the present disclosure;
FIG. 15 is a structural block diagram of a communication device according to an embodiment of the present disclosure; and
FIG. 16 is a structural block diagram of a chip according to an embodiment of the present disclosure.

### DETAILED DESCRIPTION

Embodiments of the present disclosure will be described in detail and examples of the embodiments will be illustrated in the drawings, where same or similar reference numerals are used to indicate same or similar members or members with same or similar functions. The embodiments described herein with reference to drawings are explanatory, illustrative, and used to generally understand the present disclosure. The embodiments shall not be construed to limit the present disclosure.

NTN communication is an important technology introduced by the 5G, which provides radio resources via satellites (or drones) rather than terrestrial base stations. The communication connection between the UE and the satellite is the Service Link, the connection between the satellite and the ground receiving station is the Feeder Link, and the ground receiving station is connected to the core network, thus the UE access to the core network through the satellite access network. Depending on the way the satellite processes the signal, it can be divided into a transparent mode and a regenerative mode. In the transparent mode, NTN ground station sends a gNB signal to the satellite, the satellite converts the signal to satellite frequency band and then sends it down to the UE through the satellite frequency band, and except for frequency conversion and signal amplification, the satellite does not demodulate the gNB signal, which is similar to relaying; in the regenerative mode, the NTN ground station sends the gNB signal to satellite, the satellite first demodulates and decodes the signal, then re-codes and modulates it (this process is regeneration) and sends the regenerated signal through the satellite frequency band.

Regardless of how the satellite processes the signal, for IoT NTN, the UE cannot perform the GNSS measurement while performing receiving or transmitting of LTE. In R17, the UE is not supported to reacquire the GNSS information in a CONNECTED state, so it is necessary to ensure that the GNSS position information previously acquired by the UE is always valid in the CONNECTED state. Therefore, R17 introduces that the UE report the time duration for the GNSS position fix (i.e., GNSS position) through msg5, so that the base station knows when the GNSS position fix of the UE will expire, and thus can release the connection of the UE in advance.

For R18 IoT NTN, it is necessary to support long connectivity, and therefore it is necessary to support the UE to be able to acquire the GNSS position in the CONNECTED state to ensure the long connectivity. In order to facilitate the network to configure a measurement window to the UE for GNSS position measurement, the network needs to know the time required by the UE to perform the GNSS position measurement. However, the time required by the UE to acquire the GNSS position varies from UE to UE, and for the same UE, the time required by the UE to acquire the GNSS position information varies with the environment. Therefore, 3GPP agrees to support the UE to report the time required by the UE to perform the GNSS measurement, i.e. the GNSS position fix time duration. However, it is currently unclear under what circumstances GNSS position fix time duration is reported, how to configure the reporting, and in which messages it is reported.

Thus, the present disclosure proposes a method for reporting time information, which is intended to solve the problem of unclear reporting mechanism for the time required by a UE to perform a GNSS measurement.

It may be understood that the solutions provided by the present disclosure may be applied to the satellite access network and, in particular, to the non-terrestrial network NTN, such as IoT NTN. The present disclosure provides a solution that can be applied to a core network including, but not limited to, 5G core network and other core networks supporting subsequent communication technologies, such as Long Term Evolution (LTE), Fifth Generation Mobile Communication Technology Evolution (5G-advanced), Sixth Generation (6G) Mobile Communication Technology, and the like, which is not limited in the present disclosure.

It should be understood that the method presented in the present disclosure can be applied to the NTN communication system, both in the transparent mode and in the regenerative mode. The present disclosure does not limit this.

A solution for reporting the time information provided by the present disclosure is described in detail below in conjunction with the accompanying drawings.

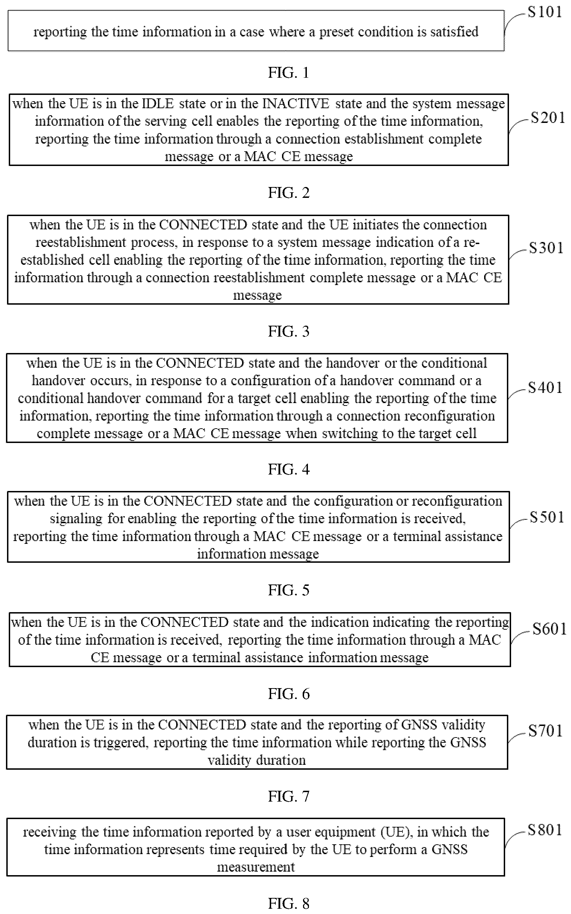

FIG. 1 is a flow chart of a method for reporting time information according to an embodiment of the present disclosure. The method is performed by a UE, and in particular, the UE of the present disclosure is an IoT UE. The UE described in the present disclosure include, but are not limited to, a smart terminal device, a cellular telephone, a wireless device, a handset, a mobile unit, a vehicle, a vehicle-mounted device, and the like, which is not limited by the present disclosure.

As illustrated in FIG. 1, the method may include following steps.

In S101: the time information is reported in a case where a preset condition is satisfied.

In embodiments of the present disclosure, the time information represents the time required by the UE to perform the GNSS measurement, i.e., the GNSS position fix time duration.

In the present disclosure, the preset condition includes at least one of the following.

In an embodiment of the present disclosure, in a case where the UE is in the IDLE state or in the INACTIVE state, and the system message indication of the serving cell enables the reporting of the time information, the UE may report the time required for the GNSS measurement. In the present embodiment, the system message may enable the UE to perform the reporting of the time information, and the system message may be explicitly or implicitly indicated to the UE, which is not limited in the present disclosure.

In another embodiment of the present disclosure, in a case where the UE is in the CONNECTED state and at least one of following occasions is present, the UE may report the time required for the GNSS measurement: the UE initiates a connection reestablishment process, a handover or a conditional handover occurs, a configuration or reconfiguration signaling for enabling the reporting of the time information is received, an indication indicating the reporting of the time information is received, or reporting of GNSS validity duration is triggered.

It could be understood that the UE initiating the connection reestablishment process in the present embodiment may refer to the UE reconnecting with the current serving cell or other candidate cells, the UE undergoing handover or conditional handover may refer to the UE performing the handover or conditional handover RRC configuration, receiving the configuration or reconfiguration signaling for enabling the reporting of the time information may refer to the UE receiving for the first time, or receiving again, a configuration signaling for enabling the reporting of the time information sent by the network device or other device, and triggering the reporting of GNSS validity duration may refer to the UE receiving a trigger instruction for triggering the UE to report the GNSS validity duration sent by the network device or other device.

It should be understood that the present embodiment gives examples of the UE performing the reporting of the time information in different states and at different occasions, where the reporting may be to a network device, or to other devices, which is not limited in the present disclosure.

In general, according to the method proposed by the present disclosure, the UE can report the time information in a case where a preset condition is satisfied, in which the time information represents time required by the UE to perform a GNSS measurement, and the preset condition includes at least one of: the UE is in an IDLE state or in an INACTIVE state, and a system message indication of a serving cell enables reporting of the time information; or the UE is in a CONNECTED state, and at least one of following occasions is present: the UE initiates a connection reestablishment process, a handover or a conditional handover occurs, a configuration or reconfiguration signaling for enabling reporting of the time information is received, an indication indicating the reporting of the time information is received, and reporting of a GNSS validity duration is triggered. The solution of the present disclosure solves the problem that a reporting mechanism for the time required by a UE to carry out GNSS measurement is not clear, so as to adapt to reporting of time information by the UE in different environments.

FIG. 2 is a flow chart of a method for reporting time information according to an embodiment of the present disclosure. The method may be performed by a UE, based on the above embodiment of the present disclosure, the present embodiment is directed to the step of reporting of the time information for a UE in a non-CONNECTED state, including an IDLE state or an INACTIVE state, as illustrated in FIG. 2, and the method may include the following step.

In S201, when the UE is in the IDLE state or in the INACTIVE state, and the system message indication of the serving cell enables the reporting of the time information, the time information is reported through a connection reestablishment complete message or a MAC CE message.

In embodiments of the present disclosure, the time information represents the time required by the UE to perform the GNSS measurement.

The connection establishment complete message may be a feedback message reported by the UE to the network device or other device that the UE in the non-CONNECTED state is successfully connected, and the MAC CE message may be an msg3 or msg5 of the MAC CE, which is not limited in the present disclosure.

In embodiments of the present disclosure, the system message indication enables the reporting of the time information, which may be done by explicit or implicit indication. For example, the network device or other device may send a system message, the system message explicitly indicates a domain value for enabling the reporting of the time information, e.g., a domain for enabling the reporting of the time information is set in the system message, which may have a domain value of 1 or 0, which, when 1, identifies that the reporting of the time information is supported/enabled, and, when 0, identifies that the reporting of the time information is not supported/enabled. For another example, the domain value may be 1, the network device or other device carries the domain value in the system message only when the reporting of the time information is supported/enabled, and does not carry the domain value when it is not supported/enabled.

The network device or other device may also enable the reporting of the time information by implicit indication, e.g. the system message indication supports/enables the R18 GNSS position enhancement, e.g. a trigger threshold for triggering the time information is configured.

In embodiments of the present disclosure, the network device may configure a trigger threshold for the time information in the system message indication of the serving cell, and a value of the trigger threshold may depend on the specific communication situation, which is not limited in the present disclosure. In an optional embodiment, the network device may also configure a trigger threshold for the time information in an RRC dedicated message.

In general, according to the method proposed by the present disclosure, when the UE is in the IDLE state or in the INACTIVE state, and the system message indication of the serving cell enables the reporting of the time information, the UE may report the time information through a connection establishment complete message or a MAC CE message, thus solving the problem of unclear reporting mechanism for the time required by the IoT UE in the non-CONNECTED state to perform a GNSS measurement.

FIG. 3 is a flow chart of a method for reporting time information according to an embodiment of the present disclosure. The method may be performed by a UE, based on the above embodiment of the present disclosure, the present embodiment is directed to the step of reporting of the time information for a UE in a CONNECTED state, as illustrated in FIG. 3, and the method may include the following step.

In S301, when the UE is In the CONNECTED state, and the UE initiates the connection reestablishment process, in response to a system message indication of a re-established cell enabling the reporting of the time information, the time information is reported through a connection reestablishment complete message or a MAC CE message.

In embodiments of the present disclosure, the time information represents the time required by the UE to perform the GNSS measurement.

The connection reestablishment complete message may be a feedback message reported by the UE to the network device or other device that the UE reconnection completes, and the MAC CE message may be an msg3 or msg5 of the MAC CE, which is not limited in the present disclosure.

In embodiments of the present disclosure, the system message indication of the re-established cell enables the reporting of the time information, which may be done by explicit or implicit indication. For example, the network device or other device may send a system message of the re-established cell, the system message explicitly indicates a domain value for enabling the reporting of the time information, e.g., a domain for enabling the reporting of the time information is set in the system message, which may have a domain value of 1 or 0, which, when 1, identifies that the reporting of the time information is supported/enabled, and, when 0, identifies that the reporting of the time information is not supported/enabled. For another example, the domain value may be 1, the network device or other device carries the domain value in the system message only when the reporting of the time information is supported/enabled, and does not carry the domain value when it is not supported/enabled.

The network device or other device may also enable the reporting of the time information by implicit indication, e.g. the system message indication supports/enables the R18 GNSS position enhancement, e.g. a trigger threshold for triggering the time information is configured.

In embodiments of the present disclosure, the network device may configure a trigger threshold for the time information in the system message indication of the serving cell, and a value of the trigger threshold may depend on the specific communication situation, which is not limited in the present disclosure. In an optional embodiment, the network device may also configure a trigger threshold for the time information in an RRC dedicated message.

In optional embodiments of the present disclosure, for an IoT UE in the CONNECTED state, the UE enables a reporting function of the time information in the CONNECTED state based on a configuration in a system message of the serving cell capable of being used to enable the reporting of the time information.

In general, according to the method proposed by the present disclosure, for the UE in the CONNECTED state, when the UE initiates the connection reestablishment process, in response to the system message indication of the re-established cell enabling the reporting of the time information, the time information is reported through a connection reestablishment complete message or a MAC CE message, thus solving the problem of unclear reporting mechanism for the time required by the IoT UE in the CONNECTED state to perform a GNSS measurement.

FIG. 4 is a flow chart of a method for reporting time information according to an embodiment of the present disclosure. The method may be performed by a UE, based on the above embodiment of the present disclosure, the present embodiment is directed to the step of reporting of the time information for a UE in a CONNECTED state, as illustrated in FIG. 4, and the method may include the following step.

In S401, when the UE in the CONNECTED state, and the handover or the conditional handover occurs, in response to a configuration of a handover command or a conditional handover command for a target cell enabling the reporting of the time information, reporting the time information through a connection reconfiguration complete message or a MAC CE message when switching to the target cell.

In embodiments of the present disclosure, the time information represents the time required by the UE to perform the GNSS measurement, and the handover command or the conditional handover command refers to a command triggering handover or conditional handover of the RRC.

The connection reconfiguration complete message may be a feedback message reported by the UE to the network device or other device that the UE handover completes, and the MAC CE message may be an msg3 or msg5 of the MAC CE, which is not limited in the present disclosure.

In embodiments of the present disclosure, if the handover or the conditional handover occurs, and a configuration of the handover RRC configuration (a handover command) or the conditional handover RRC configuration (a conditional handover command) for a target cell enables the reporting of the time information, the UE may report the time information through a connection reconfiguration complete message (i.e., a handover complete message) or msg3 or msg5 of a MAC CE message when switching to the target cell.

In a specific implementation of the present disclosure, the handover RRC configuration or the conditional handover RRC configuration refers to the RRC configuration including reconfigurationWithSync IE.

In general, according to the method proposed by the present disclosure, for the UE in the CONNECTED state, when the handover or the conditional handover occurs, in response to the configuration of the handover command or the conditional handover command for the target cell enabling the reporting of the time information, the time information is reported through a connection reconfiguration complete message or a MAC CE message when switching to the target cell, thus solving the problem of unclear reporting mechanism for the time required by the IoT UE in the CONNECTED state to perform a GNSS measurement.

FIG. 5 is a flow chart of a method for reporting time information according to an embodiment of the present disclosure. The method may be performed by a UE, based on the above embodiment of the present disclosure, the present embodiment is directed to the step of reporting of the time information for a UE in a CONNECTED state, as illustrated in FIG. 5, and the method may include the following step.

In S501, when the UE is in the CONNECTED state, and the configuration or the reconfiguration signaling for enabling the reporting of the time information is received, the time information is reported through a MAC CE message or a terminal assistance information message.

In embodiments of the present disclosure, the time information represents the time required by the UE to perform the GNSS measurement, the MAC CE message may be an msg3 or msg5 of the MAC CE, and the terminal assistance information message may be a UEAssistanceInformation message, which is not limited in the present disclosure.

Several optional implementations of the present embodiment are specifically described below.

In an optional implementation, in response to the UE not reporting the time information in a current serving cell, the UE may report the time information through the MAC CE message or the terminal assistance information message.

Specifically, for an IoT UE in the CONNECTED state, if the UE receives a configuration or reconfiguration signaling capable of being used to enable the reporting of the time information, and if the UE does not previously report the time information in the current serving cell, the UE sends the time information through a MAC CE message or a terminal assistance information message.

In another optional implementations, in response to the UE having reported the time information in a current service cell, reporting the time information through the MAC CE message or the terminal assistance information message in a case where a change in the time information currently to be reported with respect to the time information reported previously is greater than a preset threshold.

Specifically, for the IOT UE in the CONNECTED state, if the UE previously reported the time information in the current cell, the UE reports the time information if the change in the current time information with respect to the previously reported time information value is greater than a preset threshold. It should be understood that the preset threshold may be set according to specific communication scenarios, which is not limited herein.

In general, according to the method proposed by the present disclosure, For the UE in the CONNECTED state, when the configuration or the reconfiguration signaling for enabling the reporting of the time information is received, the time information is reported through a MAC CE message or a terminal assistance information message, thus solving the problem of unclear reporting mechanism for the time required by the IoT UE in the CONNECTED state to perform a GNSS measurement.

FIG. 6 is a flow chart of a method for reporting time information according to an embodiment of the present disclosure. The method may be performed by a UE, based on the above embodiment of the present disclosure, the present embodiment is directed to the step of reporting of the time information for a UE in a CONNECTED state, as illustrated in FIG. 6, and the method may include the following step.

In S601, when the UE is in the CONNECTED state, and the indication indicating the reporting of the time information is received, the time information is reported through a MAC CE message or a terminal assistance information message.

In embodiments of the present disclosure, the time information represents the time required by the UE to perform the GNSS measurement, the MAC CE message may be an msg3 or msg5 of the MAC CE, and the terminal assistance information message may be a UEAssistanceInformation message, which is not limited in the present disclosure.

In embodiments of the present disclosure, for an IoT UE in the CONNECTED state, if the UE receives an instruction for reporting the time information indicated by a network device or other device, the UE sends the time information through the MAC CE message or the terminal assistance information message.

It should be understood that the command may be explicitly or implicitly sent to the UE by the network device or other device, the command may be a command dedicated to indicating the reporting of the time information or a general command with the function of indicating the reporting time information, and that the instruction may be sent alone or together with other instructions, none of which are limited in the present disclosure.

In general, according to the method proposed by the present disclosure, for the UE in the CONNECTED state, when the indication indicating the reporting of the time information is received, the time information is reported through a MAC CE message or a terminal assistance information message, thus solving the problem of unclear reporting mechanism for the time required by the IoT UE in the CONNECTED state to perform a GNSS measurement.

FIG. 7 is a flow chart of a method for reporting time information according to an embodiment of the present disclosure. The method may be performed by a UE, based on the above embodiment of the present disclosure, the present embodiment is directed to the step of reporting of the time information for a UE in a CONNECTED state, as illustrated in FIG. 7, and the method may include the following step.

In S701, when the UE is in the CONNECTED state, and the reporting of GNSS validity duration is triggered, the time information is reported while reporting the GNSS validity duration.

In embodiments of the present disclosure, the time information represents the time required by the UE to perform the GNSS measurement, and the GNSS validity duration represents the time for which the GNSS position information is valid.

In embodiments of the present disclosure, for an IoT UE in the CONNECTED state, if the reporting of the GNSS validity duration is triggered, the time information is sent together on that occasion. As to what signaling or medium and by what means it is sent depends on the reporting mechanism of the GNSS validity duration, and any mechanism suitable for the reporting of the GNSS validity duration is applicable to the reporting of the time information, which is not limited in the present disclosure.

In general, according to the method proposed by the present disclosure, for the UE in the CONNECTED state, when the reporting of the GNSS validity duration is triggered, the UE may report the time information while reporting the GNSS validity duration, thus solving the problem of unclear reporting mechanism for the time required by the IoT UE in the CONNECTED state to perform a GNSS measurement.

Based on the embodiments illustrated in FIGS. 1 to 7, in an optional embodiment, when the time information is reported through the MAC CE message, in response to the UE currently having no available uplink resource, the UE may trigger a scheduling request (SR) resource.

Specifically, the scheduling request resource is a scheduling request resource configured by a network for reporting the time information, or a scheduling request resource configured by a network for a logical channel.

In an optional embodiment, if a scheduling request resource configured for a logical channel is used, the UE may select the scheduling request resource for the logical channel with the highest priority, or the UE may select the scheduling request resource based on the implementation.

Thus, the present disclosure also solve the problem of resource scheduling in the solution of performing the reporting of the time information.

Based on the embodiments illustrated in FIGS. 3 to 7, in an optional embodiment, for an IOT UE in the CONNECTED state, the network device or other device may enable the reporting function of the time information through an RRC dedicated message or a MAC CE. In an optional implementation, the UE may enable a reporting function of the time information based on a configuration in a system message of the serving cell capable of being used to enable the reporting of the time information. In an optional implementation, the network device or other device may directly trigger the UE to report the time information through an RRC message or a MAC CE.

Accordingly, the present disclosure provides a variety of ways to enable the reporting function of the time information, enhancing the applicability of the solution.

Based on the embodiments illustrated in FIGS. 3 to 7, in an optional implementation, when the UE is in the CONNECTED state, the UE may receive configuration information sent by a network device, and the configuration information includes a reporting periodicity for the time information. In other words, a network device or other device can configure the periodical reporting of the time information and indicate the reporting periodicity of the UE simultaneously.

Therefore, the present disclosure provides a solution for periodically reporting the time information, and the UE may perform the reporting of the time information without the need to respond to other instructions or signaling for triggering the reporting, which saves communication resources.

FIG. 8 is a flow chart of a method for reporting time information according to an embodiment of the present disclosure. The method is performed by a network device, and the network device may be a base station. As illustrated in FIG. 8, the method may include following steps.

In S801, the time information reported by a user equipment (UE) is received, in which the time information represents time required by the UE to perform a GNSS measurement.

It should be understood that, corresponding to the embodiment illustrated in FIG. 1, the present embodiment gives the network device receiving the time information reported by the UE in different states and at different occasions.

In some embodiments of the present disclosure, the network device may receive the time information reported by the UE through at least one of a connection establishment complete message, a connection reestablishment complete message, a connection reconfiguration complete message, a MAC CE message, or a terminal assistance information message, which corresponds to the embodiments described in FIGS. 1 to 7 and will not be repeated herein.

In general, according to the method proposed by the present disclosure, the network device may receive the time information reported by the UE in a case where the preset condition is satisfied, the time information represents the time required by the UE to perform the GNSS measurement; and the solution of the present disclosure solves the problem that a reporting mechanism for the time required by a UE to carry out GNSS measurement is not clear, so as to adapt to reporting of time information by the UE in different environments.

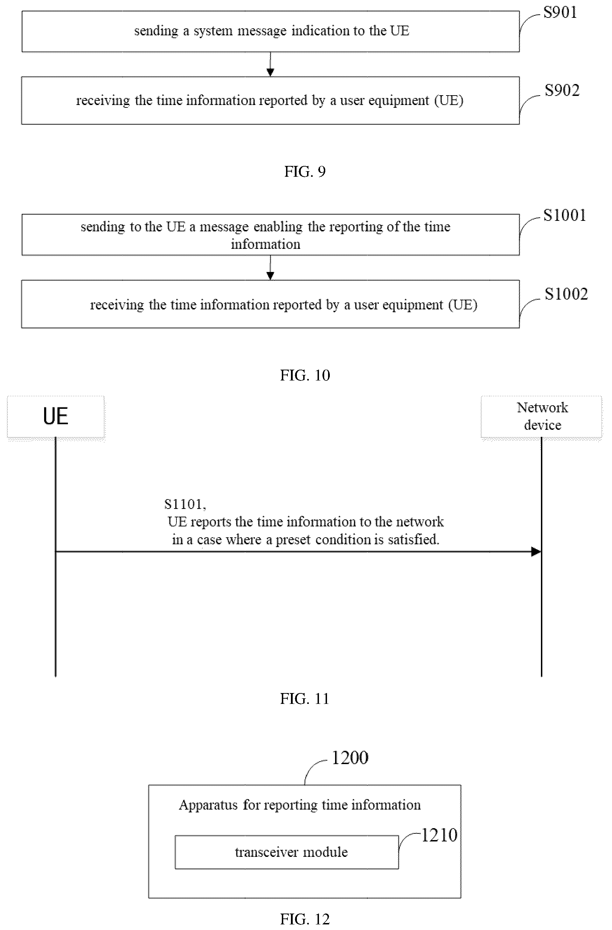

Two specific embodiments are described below by way of FIGS. 9 and 10. FIG. 9 is a flow chart of a method for reporting time information according to an embodiment of the present disclosure. The method may be performed by the network device, based on the embodiment illustrated in FIG. 8 and corresponding to the embodiment illustrated in FIG. 2, as illustrated in FIG. 9, the method may include the following steps.

In S901: a system message indication is sent to the UE.

In the present embodiment, the UE is in an IDLE state or in an INACTIVE state, a system message indication enables reporting of the time information, and the time information represents the time required by the UE to perform the GNSS measurement value.

In an optional implementation, a trigger threshold for the time information is configured in the system message indication.

In S902, the time information reported by a user equipment (UE) is received.

In the present embodiment, the network device receives the time information reported by the UE through a connection establishment complete message or a MAC CE message.

The connection establishment complete message may be a feedback message reported by the UE to the network device or other device that the UE in the non-CONNECTED state is successfully connected, and the MAC CE message may be an msg3 or msg5 of the MAC CE, which is not limited in the present disclosure.

In embodiments of the present disclosure, the system message indication enables the reporting of the time information, which may be done by explicit or implicit indication. For example, the network device or other device may send a system message, the system message explicitly indicates a domain value for enabling the reporting of the time information, e.g., a domain for enabling the reporting of the time information is set in the system message, which may have a domain value of 1 or 0, which, when 1, identifies that the reporting of the time information is supported/enabled, and, when 0, identifies that the reporting of the time information is not supported/enabled. For another example, the domain value may be 1, the network device or other device carries the domain value in the system message only when the reporting of the time information is supported/enabled, and does not carry the domain value when it is not supported/enabled.

The network device or other device may also enable the reporting of the time information by implicit indication, e.g. the system message indication supports/enables the R18 GNSS position enhancement, e.g. a trigger threshold for triggering the time information is configured.

In embodiments of the present disclosure, the network device may configure a trigger threshold for the time information in the system message indication of the serving cell, and a value of the trigger threshold may depend on the specific communication situation, which is not limited in the present disclosure. In an optional embodiment, the network device may also configure a trigger threshold for the time information in an RRC dedicated message.

The principles of the present disclosure are similar to those of the embodiment illustrated in FIG. 2, as can be seen in the embodiments illustrated in FIGS. 2 and 8, which will not be repeated herein.

In general, according to the method proposed by the present disclosure, for the UE in the IDLE state or in the INACTIVE state, when the network device may send the system message indication to the UE, and the system message indication enables the reporting of the time information, the network device may receive the time information reported by the UE through a connection establishment complete message or a MAC CE message, thus solving the problem of unclear reporting mechanism for the time required by the IoT UE in the non-CONNECTED state to perform the GNSS measurement.

FIG. 10 is a flow chart of a method for reporting time information according to an embodiment of the present disclosure. The method may be performed by the network device, based on the embodiment illustrated in FIG. 9 and corresponding to the embodiment illustrated in FIG. 5, as illustrated in FIG. 10, the method may include the following steps.

In S1001: a message enabling the reporting of the time information is sent to the UE.

In the present embodiment, the UE is in the CONNECTED state, the message is a configuration or reconfiguration signaling enabling the reporting of the time information, or an RRC dedicated message or a MAC CE message.

In S1002, the time information reported by a user equipment (UE) is received.

In embodiments of the present disclosure, the time information represents the time required by the UE to perform the GNSS measurement, the network device may receive the time information reported by the UE through the MAC CE message or the terminal assistance information message, in which the MAC CE message may be a msg3 or msg5 of the MAC CE, and the terminal assistance information message may be a UEAssistanceInformation message, which is not limited in the present disclosure.

The principles of the present disclosure are similar to those of the embodiment illustrated in FIG. 5, as can be seen in the embodiments illustrated in FIGS. 5 and 8, which will not be repeated herein.

In general, according to the method proposed by the present disclosure, for the UE in the CONNECTED state, the network device may send the configuration or the reconfiguration signaling for enabling the reporting of the time information to the UE, and the network device may receive the time information reported by the UE through a MAC CE message or a terminal assistance information message, thus solving the problem of unclear reporting mechanism for the time required by the IoT UE in the CONNECTED state to perform the GNSS measurement.

Based on all of the above embodiments, in an optional implementation, the network device may also configure a scheduling request resource to the UE. The scheduling request resource is a scheduling request resource dedicated to the UE reporting the time information, or a scheduling request resource configured for a logical channel.

Specifically, when the time information is reported through the MAC CE message, the UE may trigger a scheduling request and the network device may configure the scheduling request resource to the UE in response to the UE currently having no available uplink resource.

Thus, the present disclosure also solve the problem of resource scheduling in the solution of performing the reporting of the time information.

Based on all of the above embodiments, in an optional implementation, the network device may send configuration information to the UE, and the configuration information includes a reporting periodicity for the time information. In other words, a network device or other device can be configured to periodically report the time information and indicate the reporting periodicity of the UE simultaneously.

Therefore, the present disclosure provides a solution for periodically reporting the time information, and the UE may perform the reporting of the time information without the need to respond to other instructions or signaling for triggering the reporting, which saves communication resources.

FIG. 11 is an interaction schematic diagram of a method for reporting time information according to an embodiment of the present disclosure. The method is applied to a communication system, and the communication system includes a UE and a network device. As illustrated in FIG. 11, the method may include following steps.

In S1101: the UE reports the time information to the network device in a case where a preset condition is satisfied.

In embodiments of the present disclosure, the time information represents the time required by the UE to perform the GNSS measurement, i.e., the GNSS position fix time duration.

In the present disclosure, the preset condition includes at least one of the following.

In an embodiment of the present disclosure, in a case where the UE is in the IDLE state or in the INACTIVE state, and the system message indication of the serving cell enables the reporting of the time information, the UE may report the time required for the GNSS measurement. In the present embodiment, the system message may enable the UE to perform the reporting of the time information, and the system message may be explicitly or implicitly indicated to the UE, which is not limited in the present disclosure.

In another embodiment of the present disclosure, in a case where the UE is in the CONNECTED state and at least one of following occasions is present, the UE may report the time required for the GNSS measurement: the UE initiates a connection reestablishment process, a handover or a conditional handover occurs, a configuration or reconfiguration signaling for enabling the reporting of the time information is received, an indication indicating the reporting of the time information is received, or reporting of GNSS validity duration is triggered.

It could be understood that the UE initiating the connection reestablishment process in the present embodiment may refer to the UE reconnecting with the current serving cell or other candidate cells, the UE undergoing handover or conditional handover may refer to the UE performing the handover or conditional handover RRC configuration, receiving the configuration or reconfiguration signaling for enabling the reporting of the time information may refer to the UE receiving for the first time, or receiving again, a configuration signaling for enabling the reporting of the time information sent by the network device or other device, and triggering the reporting of GNSS validity duration may refer to the UE receiving a trigger instruction for triggering the UE to report the GNSS validity duration sent by the network device or other device.

It should be understood that the present embodiment gives examples of the UE performing the reporting of the time information in different states and at different occasions.

In general, according to the method proposed by the present disclosure, the UE can report the time information in a case where a preset condition is satisfied, in which the time information represents time required by the UE to perform a GNSS measurement, and the preset condition includes at least one of: the UE is in an IDLE state or in an INACTIVE state, and a system message indication of a serving cell enables reporting of the time information; or the UE is in a CONNECTED state, and at least one of following occasions is present: the UE initiates a connection reestablishment process, a handover or a conditional handover occurs, a configuration or reconfiguration signaling for enabling reporting of the time information is received, an indication indicating the reporting of the time information is received, and reporting of a GNSS validity duration is triggered; the network device may receive the time information reported by the UE. The solution of the present disclosure solves the problem that a reporting mechanism for the time required by a UE to carry out GNSS measurement is not clear, so as to adapt to reporting of time information by the UE in different environments.

It should be understood that the UE in the communication system illustrated in the present embodiment may be used to perform the embodiments illustrated in FIGS. 1 to 7 of the present disclosure, and the network device may be used to perform the embodiments illustrated in FIGS. 8 to 10 of the present disclosure, which will not be repeated herein.

In the above-described embodiments provided by the present application, the methods provided by the embodiments of the present application are described from the user equipment side and the network device side, respectively. In order to realize each of the functions in the method provided in embodiments of the present disclosure described above, the network device and the user equipment may include a hardware structure, a software module, in the form of a hardware structure, a software module, or a hardware structure plus a software module to realize each of the functions described above. One of the above functions can be performed as a hardware structure, a software module, or a hardware structure plus a software module.

Corresponding to the method for reporting the time information provided by the several embodiments, the present disclosure also provides an apparatus for reporting the time information. Since the apparatus for reporting the time information provided by the embodiments of the present disclosure corresponds to the method for reporting the time information provided by the several embodiments described above, the implementation of the method for reporting the time information is also applicable to the apparatus for reporting the time information provided by the present embodiment, which will not be described in detail in the present embodiment.

FIG. 12 is a structural block diagram of an apparatus 1200 for reporting the time information according to an embodiment of the present disclosure, and the apparatus 1200 for reporting the time information may be applied to the user equipment.

As illustrated in FIG. 12, the apparatus 1200 may include:
a transceiver module 1200 configured to report the time information in a case where a preset condition is satisfied,
in which the time information represents time required by the UE to perform a GNSS measurement, and the preset condition comprises at least one of:
   the UE is in an IDLE state or in an INACTIVE state and a system message indication of a serving cell enables reporting of the time information; or
   the UE is in a CONNECTED state and at least one of following occasions is present: the UE initiates a connection reestablishment process, a handover or a conditional handover occurs, a configuration or reconfiguration signaling for enabling the reporting of the time information is received, an indication indicating the reporting of the time information is received, or reporting of GNSS validity duration is triggered.

According to the method for reporting the time information of the embodiments of the present disclosure, the UE can report the time information in a case where a preset condition is satisfied, in which the time information represents time required by the UE to perform a GNSS measurement, and the preset condition includes at least one of: the UE is in an IDLE state or in an INACTIVE state, and a system message indication of a serving cell enables reporting of the time information; or the UE is in a CONNECTED state, and at least one of following occasions is present: the UE initiates a connection reestablishment process, a handover or a conditional handover occurs, a configuration or reconfiguration signaling for enabling reporting of the time information is received, an indication indicating the reporting of the time information is received, and reporting of a GNSS validity duration is triggered. The solution of the present disclosure solves the problem that a reporting mechanism for the time required by a UE to carry out GNSS measurement is not clear, so as to adapt to reporting of time information by the UE in different environments.

In some embodiments of the present disclosure, the transceiver module 1210 is specifically configured to, when the UE is in the IDLE state or in the INACTIVE state, and the system message indication of the serving cell enables the reporting of the time information, report the time information through a connection establishment complete message or a MAC CE message.

In some embodiments of the present disclosure, a trigger threshold for the time information is configured in the system message indication.

In some embodiments of the present disclosure, the transceiver module 1210 is specifically configured to, when the UE is In the CONNECTED state, and the UE initiates the connection reestablishment process, in response to a system message indication of a re-established cell enabling the reporting of the time information, report the time information through a connection reestablishment complete message or a MAC CE message.

In some embodiments of the present disclosure, the transceiver module 1210 is specifically configured to, when the UE in the CONNECTED state, and the handover or the conditional handover occurs, in response to a configuration of a handover command or a conditional handover command for a target cell enabling the reporting of the time information, report the time information through a connection reconfiguration complete message or a MAC CE message when switching to the target cell.

In some embodiments of the present disclosure, the transceiver module 1210 is specifically configured to, when the UE is in the CONNECTED state, and the configuration or the reconfiguration signaling for enabling the reporting of the time information is received, report the time information through a MAC CE message or a terminal assistance information message.

In some embodiments of the present disclosure, the transceiver module 1210 is specifically configured to, in response to the UE not reporting the time information in a current serving cell, report the time information through the MAC CE message or the terminal assistance information message.

In some embodiments of the present disclosure, the transceiver module 1210 is specifically configured to, in response to the UE having reported the time information in a current service cell, report the time information through the MAC CE message or the terminal assistance information message in a case where a change in the time information currently to be reported with respect to the time information reported previously is greater than a preset threshold.

In some embodiments of the present disclosure, the transceiver module 1210 is configured to, when the UE is in the CONNECTED state, and the indication indicating the reporting of the time information is received, report the time information through a MAC CE message or a terminal assistance information message.

In some embodiments of the present disclosure, the transceiver module 1210 is specifically configured to, when the UE is in the CONNECTED state, and the reporting of GNSS validity duration is triggered, report the time information while reporting the GNSS validity duration.

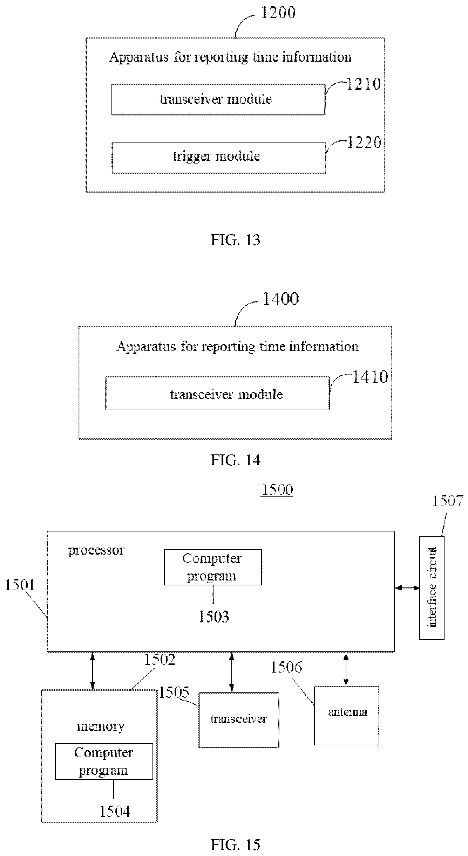

In some embodiments of the present disclosure, as illustrated in FIG. 13, the apparatus 1200 further includes:
a trigger module 1220 configured to, when the time information is reported through the MAC CE message, trigger a scheduling request resource in response to the UE currently having no available uplink resource.

In some embodiments of the present disclosure, the scheduling request resource is a scheduling request resource configured by a network for reporting the time information, or a scheduling request resource configured by a network for a logical channel.

In some embodiments of the present disclosure, when the UE is in the CONNECTED state, the transceiver module 1210 is specifically configured to receive an RRC dedicated message or a MAC CE message sent by a network device, and in response to the RRC dedicated message or the MAC CE message, enable a reporting function of the time information; or enable a reporting function of the time information based on a configuration in a system message of the serving cell capable of being used to enable the reporting of the time information.

In some embodiments of the present disclosure, when the UE is in the CONNECTED state, the transceiver module 1210 is specifically configured to receive configuration information sent by a network device, the configuration information including a reporting periodicity for the time information.

In general, according to the method for reporting the time information provided by embodiments of the present disclosure, the present disclosure provides several ways of enabling the reporting function of the time information, which improves applicability of the solution; and provides a solution for periodically reporting the time information, and the UE may perform the reporting of the time information without the need to respond to other instructions or signaling for triggering the reporting, which saves communication resources.

In addition, the problem of unclear reporting mechanism for the time required by the IoT UE in the CONNECTED state to perform the GNSS measurement in related art is solved.

FIG. 14 is a block diagram of an apparatus 1400 for reporting time information according to an embodiment of the present disclosure. The apparatus 1400 for reporting the time information may be applied to the network device.

As illustrated in FIG. 14, the apparatus 1400 may include:
a transceiver module 1410 configured to receive the time information reported by a user equipment (UE), wherein the time information represents time required by the UE to perform a GNSS measurement.

According to the method for reporting the time information provided by embodiments of the present disclosure, the network device may receive the time information reported by the UE in a case where the preset condition is satisfied, the time information represents the time required by the UE to perform the GNSS measurement; and the solution of the present disclosure solves the problem that a reporting mechanism for the time required by a UE to carry out GNSS measurement is not clear, so as to adapt to reporting of time information by the UE in different environments.

In some embodiments of the present disclosure, the transceiver module 1410 is specifically configured to receive the time information reported by the UE through at least one of a connection establishment complete message, a connection reestablishment complete message, a connection reconfiguration complete message, a MAC CE message, or a terminal assistance information message.

In some embodiments of the present disclosure, the transceiver module 1410 is specifically configured to send a system message indication to the UE, in which the UE is in an IDLE state or in an INACTIVE state, the system message indication enables reporting of the time information, and a trigger threshold for the time information is configured in the system message indication.

In some embodiments of the present disclosure, the transceiver module 1410 is specifically configured to send to the UE a message enabling the reporting of the time information, in which the message is a configuration or reconfiguration signaling enabling the reporting of the time information, or an RRC dedicated message or a MAC CE message.

In some embodiments of the present disclosure, the transceiver module 1410 is specifically configured to configure a scheduling request resource to the UE, in which the scheduling request resource is a scheduling request resource dedicated to the UE reporting the time information, or a scheduling request resource configured for a logical channel.

In some embodiments of the present disclosure, the transceiver module 1410 is specifically configured to send configuration information to the UE, the configuration information including a reporting periodicity for the time information.

In general, according to the method for reporting the time information provided by embodiments of the present disclosure, for the UE in the IDLE state or in the INACTIVE state, when the network device may send the system message indication to the UE, and the system message indication enables the reporting of the time information, the network device may receive the time information reported by the UE through a connection establishment complete message or a MAC CE message, thus solving the problem of unclear reporting mechanism for the time required by the IoT UE in the non-CONNECTED state to perform the GNSS measurement; for the UE in the CONNECTED state, the network device may send the configuration or the reconfiguration signaling for enabling the reporting of the time information to the UE, and the network device may receive the time information reported by the UE through a MAC CE message or a terminal assistance information message, thus solving the problem of unclear reporting mechanism for the time required by the IoT UE in the CONNECTED state to perform the GNSS measurement.

Additionally, the present disclosure also solve the problem of the resource scheduling in the solution of reporting the time information, and the present disclosure provides a solution for periodically reporting the time information, and the UE may perform the reporting of the time information without the need to respond to other instructions or signaling for triggering the reporting, which saves communication resources.

Embodiments of the present disclosure further provide a communication system, including: a user equipment (UE) and a network device, in which,
the UE is configured to perform the method according to any one of the embodiments as illustrated in FIGS. 1 to 7; and
the network device is configured to perform the method according to any one of the embodiments as illustrated in FIGS. 8 to 10.

In general, according to the method for reporting the time information provided by embodiments of the present disclosure, the UE can report the time information in a case where a preset condition is satisfied, in which the time information represents time required by the UE to perform a GNSS measurement, and the preset condition includes at least one of: the UE is in an IDLE state or in an INACTIVE state, and a system message indication of a serving cell enables reporting of the time information; or the UE is in a CONNECTED state, and at least one of following occasions is present: the UE initiates a connection reestablishment process, a handover or a conditional handover occurs, a configuration or reconfiguration signaling for enabling reporting of the time information is received, an indication indicating the reporting of the time information is received, and reporting of a GNSS validity duration is triggered; the network device may receive the time information reported by the UE. The solution of the present disclosure solves the problem that a reporting mechanism for the time required by a UE to carry out GNSS measurement is not clear, so as to adapt to reporting of time information by the UE in different environments.

Referring to FIG. 15, FIG. 15 is a block diagram of a communication device 1500 provided by an embodiment of the present disclosure. The communication device 1500 may be a network device, a user equipment, a chip, a chip system, or a processor, etc. that supports the network device to realize the above-described method, or a chip, a chip system, or a processor, etc. that supports the user equipment to realize the above-described method. The device may be configured to realize the methods described in the above method embodiments, and the details may be found in the description of the above method embodiments.

The communication device 1500 may include one or more processors 1501. The processor 1501 may be a general purpose processor or a specialized processor, etc. This may be, for example, a baseband processor or a central processor. The baseband processor may be used to process the communication protocol as well as the communication data, and the central processor may be used to control the communication device (e.g., the base station, the baseband chip, the terminal device, the terminal device chip, the DU or the CU, etc.), execute the computer program, and process the data of the computer program.

Optionally, the communication device 1500 may also include one or more memories 1502, on which a computer program 1504 may be stored, and the processor 1501 executes the computer program 1504 to cause the communication device 1500 to perform the method described in the method embodiment described above. Optionally, data may also be stored in the memory 1502. The communication device 1500 and the memory 1502 may be provided separately or may be integrated together.

Optionally, the communication device 1500 may also include a transceiver 1505, and an antenna 1506. The transceiver 1505 may be referred to as a transceiver unit, a transceiver machine, or a transceiver circuit, etc., and is used to implement the sending and receiving functions. The transceiver 1505 may include a receiver and a transmitter, the receiver may be referred to as a receiving machine or a receiving circuit, etc., for implementing the receiving function, and the transmitter may be referred to as a transmitting machine or a transmitting circuit, etc., for implementing the sending function.

Optionally, the communication device 1500 may also include one or more interface circuits 1507. The interface circuit 1507 is used to receive code instructions and transmit them to the processor 1501. The processor 1501 runs said code instructions to cause the communication device 1500 to perform the method described in the method embodiment above.

In an implementation, the processor 1501 may include a transceiver for implementing receiving and transmitting functions. The transceiver may, for example, be a transceiver circuit, or an interface, or an interface circuit. The transceiver circuit, interface or interface circuit used to implement the receiving and transmitting functions may be separate or integrated. The above transceiver circuit, interface or interface circuit may be used for code/data reading and writing, or the above transceiver circuit, interface or interface circuit may be used for signal transmission or delivery.

In one implementation, the processor 1501 may store a computer program 1503, and the computer program 1503 running on the processor 1501 may cause the communication device 1500 to perform the method described in the method embodiments above. The computer program 1503 may be solidified in the processor 1501, and in this case, the processor 1501 may be implemented by hardware.

In one implementation, the communication device 1500 may include a circuit, and the circuit may realize the function of sending or receiving or communicating in the method embodiments above. The processor and transceiver described in the present application may be implemented on integrated circuits (ICs), analog ICs, radio frequency integrated circuits (RFICs), mixed-signal ICs, application specific integrated circuits (ASICs), printed circuit boards (PCBs), electronic devices, and the like. The processor and transceiver can also be fabricated using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a user equipment, but the scope of the communication device described in the present disclosure is not limited thereto, and the structure of the communication device may not be limited by FIG. 15. The communication device may be a stand-alone device or may be part of a larger device. For example the communication device may be:
(1) a stand-alone integrated circuit (IC), or chip, or chip system or subsystem;
(2) a collection having one or more ICs, optionally, the collection of ICs may also include storage components for storing data, computer programs;
(3) ASIC, such as a modem;
(4) a module that can be embedded within other devices;
(5) a receiver, terminal device, smart terminal device, cellular phone, wireless device, handset, mobile unit, in-vehicle device, network device, cloud device, artificial intelligence device, and so on;
(6) Others, etc.

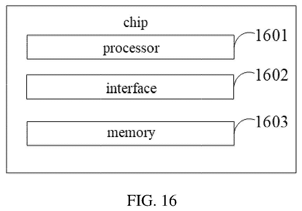

For the case where the communication device may be a chip or a chip system, see the block schematic diagram of the chip illustrated in FIG. 16. The chip illustrated in FIG. 16 includes a processor 1601 and an interface 1602. The number of processors 1601 may be one or more, and the number of interfaces 1602 may be more than one.

Optionally, the chip further includes a memory 1603, and the memory 1603 is configured to store necessary computer programs and data.

A person skilled in the art may also understand that the various illustrative logical blocks and steps set forth in the embodiments of the present application may be implemented by electronic hardware, computer software, or a combination of both. Whether such a function is realized in hardware or software depends on the specific application and the design requirements of the overall system. A person skilled in the art may, for each particular application, use a variety of functions that can be implemented using various methods, but such implementations should not be construed as being outside the scope of protection of the embodiments of the present application.

The present application also provides a readable storage medium having stored thereon instructions which, when executed by a computer, realize the functions of any of the above method embodiments.

The present application also provides a computer program product which, when executed by a computer, realizes the functions of any of the above method embodiments.

In the above embodiments, this may be accomplished in whole or in part by software, hardware, firmware, or any combination thereof. When implemented using software, it may be implemented in whole or in part as a computer program product. A computer program product includes one or more computer programs. Loading and executing a computer program on a computer produces, in whole or in part, a process or function in accordance with embodiments of the present application. A computer may be a general-purpose computer, a specialized computer, a computer network, or other programmable device. A computer program may be stored in a computer-readable storage medium or transmitted from one computer-readable storage medium to another computer-readable storage medium, e.g., the computer program may be transmitted from one website site, computer, server, or data center to another website site, computer, server, or data center by wired (e.g., coaxial cable, fiber optics, digital subscriber line (DSL)) or wireless (e.g., infrared, wireless, microwave, etc.). A computer-readable storage medium may be any available medium to which a computer has access or a data storage device such as a server, data center, etc. that contains one or more available media integrated. The available media may be magnetic media (e.g., floppy disks, hard disks, tapes), optical media (e.g., high-density digital video discs (DVDs)), or semiconductor media (e.g., solid state disks (SSDs)), among others.

A specific implementation of the present disclosure is as follows.

The UE triggers reporting of the GNSS position fix time duration in the following cases.

- For an idle/inactive IOT UE, the UE reports the GNSS position fix time duration in the connection establishment complete message, or reports the GNSS position fix time duration through the msg3 or msg5 of the MAC CE, if the system message indication of the serving cell enables the reporting of GNSS position fix time duration.

In an embodiment, the system message indication enables the reporting of the GNSS position fix time duration, either as an explicit or an implicit indication. The implicit indication, e.g. system message indication supports/enables R18 GNSS position enhancement, e.g. a trigger threshold for triggering GNSS position fix time duration is configured.

- For an IOT UE in the CONNECTED state, the UE reports the GNSS position fix time duration in the connection reestablishment complete message, or reports the GNSS position fix time duration through the msg3 or msg5 of the MAC CE, if the UE initiates the connection reestablishment process, and the system message indication of the re-established cell enables the reporting of GNSS position fix time duration.
- For an IOT UE in the CONNECTED state, the UE reports the GNSS position fix time duration through the connection reconfiguration complete message (i.e., switchover complete) or reports the GNSS position fix time duration through the msg3 or msg5 of the MAC CE, when switching to the target cell, if a handover or conditional handover occurs, and a configuration in the handover RRC configuration (handover command) or in the conditional handover RRC configuration (conditional handover command) for the target cell enables the reporting of the GNSS position fix time duration.

In an embodiment, the handover RRC configuration or the conditional handover RRC configuration refers to the RRC configuration including reconfigurationWithSync IE.
- For an IOT UE in the CONNECTED state, the UE sends the GNSS position fix time duration through the MAC CE or UEAssistanceInformation message, if the UE receives configuration or reconfiguration signaling capable of being used to enable the reporting of the GNSS position fix time duration.
- For an IOT UE in the CONNECTED state, the UE sends the GNSS position fix time duration through the MAC CE or UEAssistanceInformation message, if the UE receives configuration or reconfiguration signaling capable of being used to enable the reporting of the GNSS position fix time duration, and the UE does not report the GNSS position fix time duration previously in the current serving cell.
- For an IOT UE in the CONNECTED state, the UE reports the GNSS position fix time duration, if the UE has previously reported the GNSS position fix time duration in a current cell, and the change in the current GNSS position fix time duration with respect to the previously reported value is greater than a certain threshold.
- For an IOT UE in the CONNECTED state, the UE sends the GNSS position fix time duration through the MAC CE or UEAssistanceInformation message, if the UE receives the GNSS position fix time duration for reporting indicated by the base station.
- For the IOT UE in the CONNECTED state, the UE reports the GNSS position fix time duration at the same time, if the reporting of the GNSS position fix time duration is triggered.

In an embodiment, if the GNSS position fix time duration is reported through the MAC CE, and the UE currently has no available UL resource, the UE triggers the SR.

In an embodiment, the SR resource may be a network-configured SR resource dedicated to the reporting of the GNSS position fix time, or use an SR resource configured for the logical channel.

In an embodiment, if the SR resource configured for the logical channel is used, the UE may select the SR resource for the logical channel with the highest priority, or the UE may select the SR resource based on the implementation.

In an embodiment, for an IOT UE in the CONNECTED state, the base station enables the reporting function of the GNSS position fix time duration through the RRC dedicated message or the MAC CE.

In an embodiment, the base station may configure a periodic reporting of the GNSS position fix time duration and indicate the reporting periodicity, simultaneously.

In an embodiment, for an IoT UE in the CONNECTED state, the UE enables a function of the GNSS position fix time duration in the CONNECTED state based on a configuration in a system message of the serving cell capable of being used to enable the reporting of the GNSS position fix time duration.

In an embodiment, for an IOT UE in the CONNECTED state, the base station directly enables the reporting of the GNSS position fix time duration through the RRC message or the MAC CE.

In an embodiment, the base station configures a trigger threshold for the GNSS position fix time duration in a system message or an RRC dedicated message.

A person skilled in the art may understand that the first, second and other numbers involved in the present application are only described for the convenience of distinction, and are not used to limit the scope of the embodiments of the present application, but also indicate the order of precedence.

The at least one of the present application may also be described as one or more, and the plurality may be two, three, four, or more, without limitation of the present application. In embodiments of the present application, for a type of technical feature, the technical features in the type of technical feature are distinguished by "first", "second", "third", "A", "B", "C" and "D", etc., the technical features described by the "first", "second", "third", "A", "B", "C", and "D", are in no order of priority or size.

As used herein, the terms "machine-readable medium" and "computer-readable medium" refer to any computer program product, device, and/or apparatus (e.g., disk, CD-ROM, memory, programmable logic device (PLD)) used to provide machine instructions and/or data to a programmable processor, memory, programmable logic device (PLD)), including a machine-readable medium that receives machine instructions as machine-readable signals. The term "machine readable signal" refers to any signal used to provide machine instructions and/or data to a programmable processor.

The systems and techniques described herein may be implemented in a computing system that includes a back-end component (e.g., as a data server), or a computing system that includes a middleware component (e.g., an application server), or a computing system that includes a front-end component (e.g., a user's computer that has a graphical user interface or a web browser through which a user can interact with the systems and techniques described herein), or in a computing system that includes any combination of such back-end components, middleware components, or front-end components. The components of the system can be interconnected by digital data communication in any form or medium (e.g., a communications network). Examples of communication networks include: local area networks (LANs), wide area networks (WANs), and the Internet.

Computer systems can include clients and servers. Clients and servers are generally far away from each other and usually interact over communication networks. A client-server relationship is created by computer programs that run on corresponding computers and have a client-server relationship with each other.

It should be understood that steps may be reordered, added, or deleted using various forms of the process shown above. For example, the steps recited in the present disclosure may be performed in parallel or sequentially or in a different order, and are not limited herein as long as they are capable of realizing the desired results of the technical solutions disclosed in the present disclosure.

In addition, it should be understood that various embodiments of the present application may be implemented individually or in combination with other embodiments as the solution allows.

A person skilled in the art may realize that the units and algorithmic steps of the various examples described in conjunction with the embodiments disclosed herein are capable of being implemented in electronic hardware, or a combination of computer software and electronic hardware. Whether these functions are performed in hardware or software depends on the specific application and design constraints of the technical solution. A person skilled in the art may use different methods for each particular application to achieve the described functionality, but such implementations should not be considered outside the scope of the present application.

It is clearly understood by those skilled in the field to which it belongs that, for the convenience and brevity of the description, for the specific working processes of the above-described systems, apparatuses, and units reference can be made to the corresponding processes in the foregoing embodiments of the method, and details will not be repeated herein.

The above-described are merely specific implementations of the present application, but the protection scope of the present application is not limited to this. The conceivable change or alternative by those skilled in the art within the technical scope disclosed by the present application should be covered in the protection scope of the present application. Therefore, the protection scope of the present application is subject to the protection scope of the claims.

## Claims

1. A method for reporting time information, performed by a user equipment (UE), comprising:
reporting the time information in a case where a preset condition is satisfied,
wherein the time information represents time required by the UE to perform a GNSS measurement, and the preset condition comprises at least one of:
the UE is in an IDLE state or in an INACTIVE state and a system message indication of a serving cell enables reporting of the time information; or
the UE is in a CONNECTED state and at least one of following occasions is present: the UE initiates a connection reestablishment process, a handover or a conditional handover occurs, a configuration or reconfiguration signaling for enabling the reporting of the time information is received, an indication indicating the reporting of the time information is received, or reporting of GNSS validity duration is triggered.

2. The method according to claim 1, wherein when the UE is in the IDLE state or in the INACTIVE state and the system message indication of the serving cell enables the reporting of the time information, reporting the time information comprises:
reporting the time information through a connection establishment complete message or a MAC CE message.

3. The method according to claim 2, wherein a trigger threshold for the time information is configured in the system message indication.

4. The method according to any one of claims 1 to 3, wherein when the UE is in the CONNECTED state and the UE initiates the connection reestablishment process, reporting the time information comprises:
in response to a system message indication of a re-established cell enabling the reporting of the time information, reporting the time information through a connection reestablishment complete message or a MAC CE message.

5. The method according to any one of claims 1 to 4, wherein when the UE is in the CONNECTED state and the handover or the conditional handover occurs, reporting the time information comprises:
in response to a configuration of a handover command or a conditional handover command for a target cell enabling the reporting of the time information, reporting the time information through a connection reconfiguration complete message or a MAC CE message when switching to the target cell.

6. The method according to any one of claims 1 to 5, wherein when the UE is in the CONNECTED state and the configuration or reconfiguration signaling for enabling the reporting of the time information is received, reporting the time information comprises:
reporting the time information through a MAC CE message or a terminal assistance information message.

7. The method according to claim 6, wherein reporting the time information through the MAC CE message or the terminal assistance information message comprises:
in response to the UE not reporting the time information in a current serving cell, reporting the time information through the MAC CE message or the terminal assistance information message.

8. The method according to claim 6, wherein reporting the time information through the MAC CE message or the terminal assistance information message comprises:
in response to the UE having reported the time information in a current service cell, reporting the time information through the MAC CE message or the terminal assistance information message in a case where a change in the time information currently to be reported with respect to the time information reported previously is greater than a preset threshold.

9. The method according to any one of claims 1 to 8, wherein when the UE is in the CONNECTED state and the indication indicating the reporting of the time information is received, reporting the time information comprises:
reporting the time information through a MAC CE message or a terminal assistance information message.

10. The method according to any one of claims 1 to 9, wherein when the UE is in the CONNECTED state and the reporting of GNSS validity duration is triggered, reporting the time information comprises:
reporting the time information while reporting the GNSS validity duration.

11. The method according to any one of claims 1 to 10, further comprising:
when the time information is reported through the MAC CE message, triggering a scheduling request resource in response to the UE currently having no available uplink resource.

12. The method according to claim 11, wherein the scheduling request resource is a scheduling request resource configured by a network for reporting the time information, or a scheduling request resource configured by a network for a logical channel.

13. The method according to any one of claims 1 to 12, wherein when the UE is in the CONNECTED state, the method further comprises:
receiving an RRC dedicated message or a MAC CE message sent by a network device, and in response to the RRC dedicated message or the MAC CE message, enabling a reporting function of the time information; or
enabling a reporting function of the time information based on a configuration in a system message of the serving cell capable of being used to enable the reporting of the time information.

14. The method according to any one of claims 1 to 13, wherein when the UE is in the CONNECTED state, the method further comprises:
receiving configuration information sent by a network device, the configuration information comprising a reporting periodicity for the time information.

15. A method for reporting time information, performed by a network device, comprising:
receiving the time information reported by a user equipment (UE), wherein the time information represents time required by the UE to perform a GNSS measurement.

16. The method according to claim 15, wherein receiving the time information reported by the user equipment (UE) comprises:
receiving the time information reported by the UE through at least one of a connection establishment complete message, a connection reestablishment complete message, a connection reconfiguration complete message, a MAC CE message, or a terminal assistance information message.

17. The method according to claim 15 or 16, further comprising:
sending a system message indication to the UE, wherein the UE is in an IDLE state or in an INACTIVE state, the system message indication enables reporting of the time information, and a trigger threshold for the time information is configured in the system message indication.

18. The method according to any one of claims 15 to 17, further comprising:
sending to the UE a message enabling the reporting of the time information, wherein the message is a configuration or reconfiguration signaling enabling the reporting of the time information, or an RRC dedicated message or a MAC CE message.

19. The method according to any one of claims 15 to 18, further comprising:
configuring a scheduling request resource to the UE, wherein the scheduling request resource is a scheduling request resource dedicated to the UE reporting the time information, or a scheduling request resource configured for a logical channel.

20. The method according to any one of claims 15 to 19, further comprising:
sending configuration information to the UE, the configuration information comprising a reporting periodicity for the time information.

21. An apparatus for reporting the time information, comprising:
a transceiver module configured to report the time information in a case where a preset condition is satisfied,
wherein the time information represents time required by the UE to perform a GNSS measurement, and the preset condition comprises at least one of:
the UE is in an IDLE state or in an INACTIVE state and a system message indication of a serving cell enables reporting of the time information; or
the UE is in a CONNECTED state and at least one of following occasions is present: the UE initiates a connection reestablishment process, a handover or a conditional handover occurs, a configuration or reconfiguration signaling for enabling the reporting of the time information is received, an indication indicating the reporting of the time information is received, or reporting of GNSS validity duration is triggered.

22. An apparatus for reporting the time information, comprising:
a transceiver module configured to receive the time information reported by a user equipment (UE), wherein the time information represents time required by the UE to perform a GNSS measurement.

23. A communication device, comprising: a transceiver, a memory, and a processor connected to the transceiver and the memory, configured to control wireless signal transceiving of the transceiver by executing computer-executable instructions on the memory, and cause the method according to any one of claims 1 to 20 to be implemented.

24. A computer storage medium storing computer executable instructions that when executed by a processor, causes the method according to any one of claims 1 to 20 to be implemented.

25. A communication device, comprising:
a user equipment (UE) and a network device, wherein
the UE is configured to perform the method according to any one of claims 1 to 14; and
the network device is configured to perform the method according to any one of claims 15 to 20.
